# EUROPEAN PATENT APPLICATION

(11) **EP 2 128 436 A2**
(43) Date of publication of application: **02.12.2009**
(21) Application number: 09398001.9
(22) Date of filing: 05.02.2009
(51) Int. Cl.: F03D 3/06, F03B 17/06, F03D 3/04

(54) **Turbine with articulated and retractable blades for harnessing energy from a moving fluid**

(30) Priority: 20.05.2008 PT 10406508
(71) Applicant: Ventura Ribeiro de Matos, Antonio, 4501-908 Espinho Codex (PT)
(72) Inventor: Ventura Ribeiro de Matos, Antonio, 4501-908 Espinho Codex (PT)
(74) Representative: Pereira da Cruz, Joao

(57) **Abstract**

This invention relates to a turbine 1 comprising articulated and retractable blades 2 intended to harness energy from a moving fluid. It is basically **characterized in that** said blades 2 are arranged in an articulated way around a core, in order to cause, in their active phase, the rotation of said core 3 by pressing the fluid whenever some of those blades 2 are spaced between them, on their outer surrounding surface, thus performing a rotation around the articulation of the core 3, and said blades being folded over the core's surface as from the moment when they cease to be pressured by the fluid flow and turn to their passive phase.

## Description

This invention relates to a turbine with articulated and retractable blades, said turbine being intended for harnessing energy from moving fluids.

Several forms of harnessing energy are currently known, some of them providing high yields when exploited. From these, reference is made to hydraulic, wind, tides and waves harnessing systems. However, the equipments used for collecting energy in any of the aforementioned systems are complex and expensive equipments, sometimes requiring complicated maintenance, in addition to other disadvantages.

Usually, the equipment intended for harnessing energy from moving fluids is designed to collect and convert the mechanical energy contained in a fluid into shaft-work, commonly of a generator, so that the kinetic energy is converted into mechanical energy. For that purpose, there are different types of turbines, all of them having a basic construction shape, i.e. a rotor comprising a number of blades or vanes which are connected to a shaft, this one rotating around a set of bearings.

This invention discloses equipment using a turbine whose rotor blades are articulated and retractable. With this feature, an equipment was designed which can be used with the flow either in a given direction or in the opposite direction.

### Brief description of the drawings

The following description is based on the enclosed drawings which, with a non-limiting character, represent preferred embodiments of the invention, wherein:
Figure 1 illustrates the equipment comprising a turbine which is the object of the invention;
Figure 2 illustrates another embodiment of the equipment;
Figure 3 illustrates the embodiment of Figure 2 but with the flow in the opposite direction;
Figure 4 is a perspective view of the turbine of this invention;
Figure 5 illustrates the equipment aimed at operating with the fluid flow in both directions;
Figure 6 is a detailed view of the damping system and the blade stop; and
Figure 7 illustrates the object of the invention used for collecting wind energy.

### Detailed description of the invention

As can be seen from the figures, the blades 2 of the turbine - generally represented with the reference number 1 - are arranged in an articulated way around a core or rotor 3, in order to cause, in their active phase, the rotation of said core 3 by pressing the fluid whenever some of those blades 2 are spaced between them, on their outer surrounding surface, thus performing a rotation around the articulation of the core 3, and said blades being folded over the core's surface 3 as from the moment when they cease to be pressured by the fluid flow and turn to their passive phase.

As previously mentioned, said blades are articulated around the core 3 so that in the passive phase they can be folded over the core's surface 3. The blades 2 thus retracted, although being assembled in the core 3 in an articulated way, at well-defined and regular intervals, have their distal ends almost overlapped to the immediately preceding blade.

The above mentioned core or rotor 3 is mounted in a substantially circular chamber 4 whose diameter is larger than the blades' external surrounding surface when they are in their spaced position, i.e. in their active phase. Said chamber 4 is connected to the upstream inlet duct 5 and to the downstream outlet duct 6.

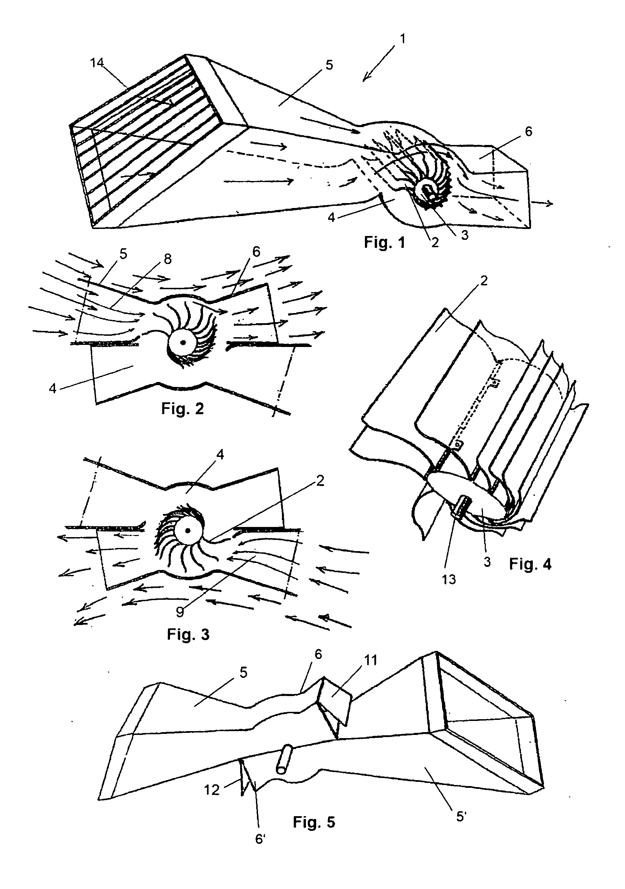

In case the turbine 1 is aimed at being used with fluid flows of opposite directions, the equipment comprises the coupling, with the required adjustments, of two embodiments which are illustrated in Figure 1.

In the embodiment illustrated in Figures 2, 3 and 5, the equipment is prepared to be driven by fluid flows, either in the direction of the arrows 8 or in the opposite direction as shown by the arrows 9. In both cases, there is also an inlet duct 5 and 5', and an outlet duct 6 and 6', respectively. The chamber 4 has approximately the same dimensions of the chamber included in the equipment aimed at operating with one-way flows only.

This second embodiment will allow the turbine to be used with flows of opposite directions as is the case, for instance, of tidal streams. In order to continuously operate an electric power generator, which is driven by kinetic energy from tides, it is enough to put the equipment according to the second embodiment in an appropriate place, in as much as the changing direction of flows, respectively associated to flood-tide and ebb-tide, will not affect the amount of movement which is transmitted, in this case from the generator, to the core's or rotor's shaft 3. As results from the above and also from the figures 2, 3 and 5, the blades 2 of the turbine 1, always rotating in the same direction, are driven by the flow indicated by the arrow 8, when it is directed from upstream to downstream, and by the flow indicated by the arrow 9, when it is directed from downstream to upstream, which in the case of tides would correspond to a flow resulting, respectively, from low-water and high-water level.

The blades 2 have, in this specific case, an active phase and a passive phase when the fluid's movement has the direction indicated by arrow 8 (figure 2), and reverse phases when the fluid's movement is the one indicated by arrow 9 (figure 3) .

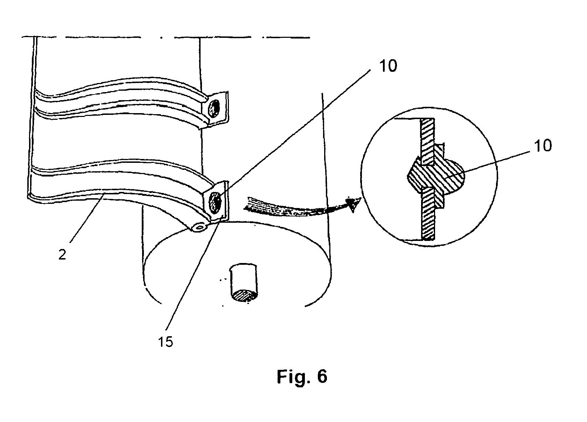

As previously mentioned, said blades 2 are articulated in the core's or rotor's surface 3, comprising a damping system such as the one illustrated in figure 6, which may be comprised of a flexible element 10. This element 10 will cushion the articulating and folding movement of the blade 2, thus avoiding unnecessary collision, wear and noise. Each blade is further comprised of stops 15, these stops preventing the blades from performing pitch movements which are greater than the pre-set amplitude. The elements 15 work together with the blades 2 in order to limit the opening movement of the latter, acting as detents against the body of the core 3 when said blades are operated in the active phase. It is the collision of these stops 15 that will be duly cushioned by the aforementioned damping system.

As can be seen from the enclosed figures, the fluid's entry or inlet duct 5 which carries said fluid to the blades 2 of the core 3 is a convergent tubular duct, wherein the Venturi effect is produced so as to increase velocity and reduce pressure. On the other hand, the fluid leaves the chamber 4 of the core 3 through a divergent tubular duct 6, which causes it to have a reduced velocity and an increased pressure.

In Figure 5 are also illustrated the gates 11 and 12, which are assembled in the outlet ducts 6 and 6' respectively, said gates allowing the fluid, depending on the flow direction and after having driven the shaft 13 of the rotor 3, to come out without causing turbulence in the chamber 4. In fact, when the flow moves from left to right, the fluid eventually going out through the outlet duct 6', i.e. the duct designed to receive the flow in the opposite direction, would cause some turbulence within the chamber 4, this factor being susceptible of reducing dramatically the yield of this type of machine. This is the reason why the equipment was provided with gates 11 and 12. As is evident from the figure 5, when the flow moves from the left to the right, the gate 12 of the outlet duct 6' is closed and the gate 11 opens. When the flow moves from the right to the left, the gate 11 of the duct 6 is closed and the gate 12 opens to the outgoing flow. This means the gates are opened and closed exclusively by the fluid's pressure.

The inlet nozzles of ducts 5 and 5' can be protected with a grid 14, in order to avoid entrance in the duct of items of a sufficient size to cause damage to the blades 2 or the core 3.

Said inlet and outlet nozzles may be built so as to allow the formation of batteries with a view to enhance the energy collection.

The aforementioned equipment may be employed in a variety of situations. Preferably, the equipment should be fully immersed in the fluid, be it water or air, the whole equipment being suitable to be used in several positions, such as vertical and horizontal. Among those situations, and as non-limiting examples, reference is herein made to the use intended for extracting energy from tides, from surface or deep water currents, both from rivers and from the sea, and also from wind.

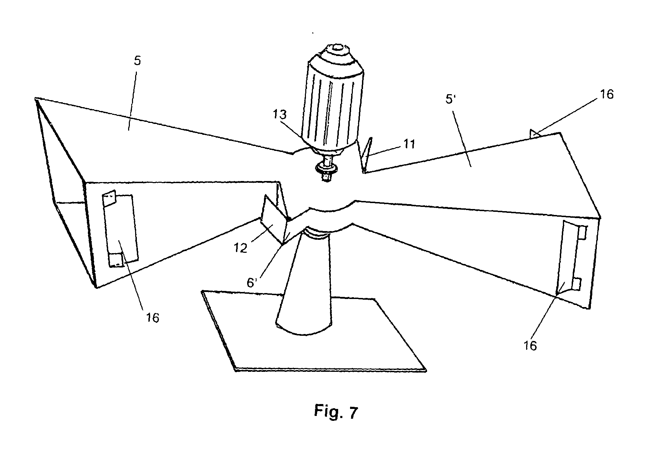

In case this equipment is aimed at collecting wind energy, the assembly illustrated in figure 7 further comprises rudder-type guiding devices, so as to allow the most favourable direction of flow to be captured. In the illustrated case, said devices include two substantially rectangular elements 16 which are articulated in the essentially vertical walls of the inlet ducts 5 and 5', being positioned adjacent to the respective inlet nozzles. As can be concluded, when the flow moves in a given direction, a pair of elements will be "opened" and guide the equipment, while the pair of the opposite inlet duct is inactivated and "closed" under the action of the same wind.

As will be evident to those skilled in the art related to this type of turbine, different materials may be used in the ducts, such as steel, plastic, concrete, etc.

## Claims

1. A turbine (1) with articulated and retractable blades (2) intended to harness energy from a moving fluid, **characterized in that** said blades (2) are arranged in an articulated way around a core (3), in order to cause, in their active phase, the rotation of said core by pressing said fluid whenever some of those blades (2) are spaced between them, on their outer surrounding surface, thus performing a rotation around the articulation of the core, and said blades being folded over the core's surface (3) as from the moment when they cease to be pressured by the fluid flow and turn to their passive phase.

2. A turbine with articulated and retractable blades according to claim 1, **characterized in that** said core (3) is mounted in a circular chamber (4) whose diameter is larger than the blades' external surrounding surface (2) when they are in their spaced position.

3. A turbine with articulated and retractable blades according to the preceding claims, **characterized in that** said fluid is water.

4. A turbine with articulated and retractable blades according to the preceding claims, **characterized in that** said fluid is air.

5. A turbine with articulated and retractable blades according to the preceding claims, **characterized in that** said fluid is carried to the core (3) through a convergent tubular duct (5, 5')) wherein the "Venturi" effect is produced so as to increase velocity and reduce pressure.

6. A turbine with articulated and retractable blades according to the preceding claims, **characterized in that** the fluid comes out the chamber (4) of the core (3) through a divergent tubular duct (6, 6')) which causes it to have a reduced velocity and an increased pressure.

7. A turbine with articulated and retractable blades according to the preceding claims, **characterized in that** said core drives a shaft (13) which feeds, at least, one generator.

8. A turbine with articulated and retractable blades according to the preceding claims, **characterized in that** each blade (2) comprises stops (15).

9. A turbine with articulated and retractable blades according to the preceding claims, **characterized in that** said stops (15) prevent the blades from performing pitch movements which are greater than the pre-set amplitude.

10. A turbine with articulated and retractable blades according to the preceding claims, **characterized in that** each stop (15) comprises a damping system (10) which is designed to mitigate collisions during opening when the blades are in their active phase, as well as noises.

11. A turbine with articulated and retractable blades according to the preceding claims, **characterized in that** the same core (3) may be mounted into symmetrical ducts (5 and 6) in order to harness alternate flows of opposite directions.

12. A turbine with articulated and retractable blades according to the preceding claims, **characterized in that** the inlet nozzles of ducts can be protected with a grid (14).

13. A turbine with articulated and retractable blades according to the preceding claims, **characterized in that** the inlet and outlet nozzles can be built so as to allow the formation of batteries for an enhanced energy collection.

14. A turbine with articulated and retractable blades according to the preceding claims, **characterized in that** the outlet ducts (6 and 6') are provided with gates (11 and 12) in order to avoid turbulence in the chamber (4).

15. A turbine with articulated and retractable blades according to the preceding claims, **characterized in that,** when the flow is air, the inlet ducts may comprise rudder-type guiding devices (16) for capturing the flow's most favourable direction.

16. A turbine with articulated and retractable blades according to the preceding claims, **characterized in that** the rudders (16) are positioned adjacent to the nozzles of inlet ducts (5, 5') and are comprised of rectangular plates being articulated to the essentially vertical surface of the ducts.
